(19) Europäisches Patentamt
European Patent Office
Office européen des brevets

(11) EP 3 950 897 A1

(12) **EUROPEAN PATENT APPLICATION**
published in accordance with Art. 153(4) EPC

(43) Date of publication:
**09.02.2022 Bulletin 2022/06**

(21) Application number: **19921706.8**

(22) Date of filing: **26.03.2019**

(51) International Patent Classification (IPC):
***C10M 143/00*** *(2006.01)* ***C10M 105/32*** *(2006.01)*
***C10M 107/02*** *(2006.01)* ***C10M 169/04*** *(2006.01)*

(52) Cooperative Patent Classification (CPC):
**C10M 105/32; C10M 107/02; C10M 143/00; C10M 169/04**

(86) International application number:
**PCT/JP2019/013006**

(87) International publication number:
**WO 2020/194551 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mitsui Chemicals, Inc.**
**Tokyo 105-7122 (JP)**

(72) Inventor: **ABE Shota**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **LUBRICANT OIL COMPOSITION FOR COMPRESSOR OIL AND METHOD FOR PREPARING SAME**

(57) [Object]

To provide a lubricating oil composition for compressor oils having remarkably excellent temperature viscosity properties, and further having excellent stability of thermal oxidation resistance.

[Solution]

A lubricating oil composition for compressor oils, including
10 to 99% by mass of a lubricant base oil (A) having a kinematic viscosity at 100°C of 1 to 14 $mm^2/s$, a viscosity index of 100 or more, and a pour point of 0°C or lower, and 90 to 1% by mass of a liquid random copolymer ethylene-$\alpha$-olefin copolymer (B) of ethylene and $\alpha$-olefin, the liquid random copolymer ethylene-$\alpha$-olefin copolymer (B) being prepared by means of a specific catalyst (where the total amount of (A) and (B) is 100% by mass),
the lubricating oil composition for compressor oils having a kinematic viscosity at 40°C of 10 to 300 $mm^2/s$.

EP 3 950 897 A1

## Description

### Technical Field

The present invention relates to a lubricating oil composition for compressor oils and a method for producing the same.

### Background Art

The rotary-type gas compressor has little vibration compared to reciprocating-type gas compressors, and the temperature of discharge gas can be lowered by operating the compressor whilst injecting a large amount of lubricating oil into the compressor parts. Moreover, amongst the rotary-type gas compressors, the oil-flooded screw compressor has become widely utilized in the industry in place of the conventionally utilized reciprocating-type compressor, due to features such as high efficiency, compact size, low noise, long-term continuous operability, and low maintenance cost. Such oil-flooded screw compressors have a tendency to have a high discharge pressure and to be free-draining (preventing the formation of condensed water), and hence there is also an increased demand for heat resistance of lubricating oil for compressor oil, which has a tendency to have an increased discharge temperature overall (refer to Non-Patent Literature 1) .

Meanwhile, as global warming advances, it is an urgent task to cut carbon dioxide emissions, which is one of the gases contributing to the greenhouse effect. Reducing the amount of electric power consumption has also come to be demanded for compressors, which are used in various industrial fields. In order to reduce the electric power consumption amount of compressors, it is necessary to reduce the lubricating oil agitation torque of the screw member, as well as to lower the energy for circulating the lubricating oil by an oil pump. To deal with this, the viscosity of lubricating oil is usually lowered (refer to Patent Literature 1). However, since viscosity also ends up becoming lowered at high temperatures due to the lowering of the base oil viscosity, oil film formation becomes difficult at high temperatures, and as a result, heat resistance has been lost. In order to find a balance between a low torque at low temperatures in the vicinity of the operating temperatures, and oil film formation at high temperatures, there have been investigations into the use of synthetic oil (poly-α-olefin), which has excellent temperature viscosity properties, in place of the conventionally utilized mineral oil. However, there was still room for further investigation (refer to Patent Literature 2).

Patent Literature 3 discloses a lubricating oil composition containing a specific lubricant base oil and a specific ethylene-α-olefin copolymer, where this composition has a balance of these properties, and which is suitably applicable to compressor oil.

Moreover, Patent Literature 4 describes a method for producing a liquid random copolymer of ethylene and α-olefin, wherein further described is that this copolymer is useful as a lubricating oil.

### Citation List

#### Patent Literature

Patent Literature 1: JP 2008-179679 A
Patent Literature 2: JP 2002-519448 A
Patent Literature 3: JP 2016-069407 A
Patent Literature 4: EP 2921509 A1

#### Non-Patent Literature

Non-Patent Literature 1: Illustrated guide to the introductory basics of industrial lubricating oil (2011); Author/Editor: Lubricants Department, Lubricant Technology 2nd section of Idemitsu Kosan Co Ltd, published by Nikkan Kogyo Shimbun, Ltd [The Daily Industrial News]

### Summary of Invention

#### Technical Problem

However, there was further room for improvement in conventional lubricating oil compositions, from the perspective of providing a lubricating oil composition for compressor oils having remarkably excellent temperature viscosity

properties; namely, having oil film retention properties at high temperatures, as well as low-temperature viscosity properties, and further having excellent thermal and oxidation stability.

Solution to Problem

The present inventors keenly investigated the development of a lubricating oil composition for compressor oils having excellent performance, and as a result, discovered that the aforementioned problem can be solved with a lubricating oil composition which contains, with a specific lubricant base oil, an ethylene-$\alpha$-olefin (co)polymer prepared by means of a specific catalyst, and satisfies specific conditions, thus arriving at the perfection of the present invention. The present invention specifically mentions the below aspect.
[1] A lubricating oil composition for compressor oils, comprising

10 to 99% by mass of a lubricant base oil (A) having the properties of the below (A1) to (A3), and
90 to 1% by mass of a liquid random copolymer (B) of ethylene and $\alpha$-olefin, the liquid random copolymer (B) being prepared by the below method ($\alpha$) (where the total amount of the lubricant base oil (A) and the copolymer (B) is 100% by mass), the lubricating oil composition for compressor oils having the property of the below (C1).

(A1) The lubricant base oil (A) has a kinematic viscosity at 100°C of 1 to 14 $mm^2/s$.
(A2) The lubricant base oil (A) has a viscosity index of 100 or more.
(A3) The lubricant base oil (A) has a pour point of 0°C or lower.
(C1) The lubricating oil composition for compressor oils has a kinematic viscosity at 40°C of 10 to 300 $mm^2/s$.

(Method ($\alpha$))
A method ($\alpha$) for preparing a liquid random copolymer of ethylene and $\alpha$-olefin, comprising a step of carrying out solution polymerization of ethylene and $\alpha$-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

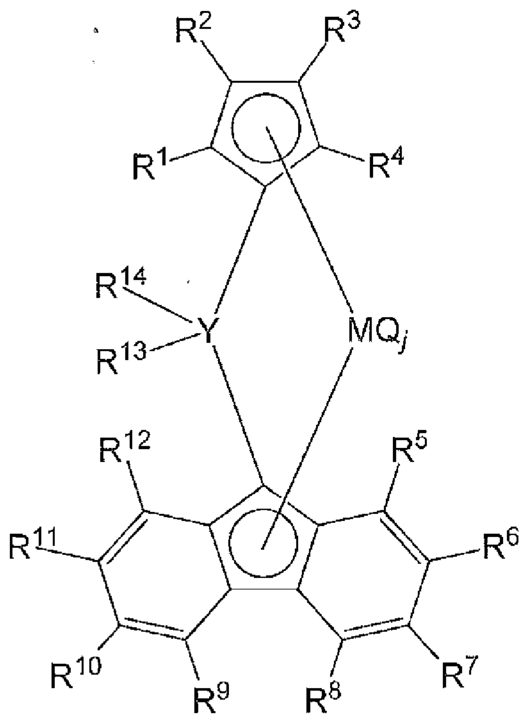

... (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

[2] The lubricating oil composition for compressors of the aforementioned [1], wherein in the metallocene compound represented by the above Formula 1, at least one among substituents ($R^1$, $R^2$, $R^3$ and $R^4$) bonded to a cyclopentadienyl group is a hydrocarbon group having 4 or more carbon atoms.
[3] The lubricating oil composition for compressors of the aforementioned [1] or [2], wherein $R^6$ and $R^{11}$, being the same, are hydrocarbon groups having 1 to 20 carbon atoms.
[4] The lubricating oil composition for compressors of any of the aforementioned [1] to [3], wherein in the metallocene compound represented by the above Formula 1, substituent ($R^2$ or $R^3$) bonded to the 3-position of the cyclopentadienyl group is a hydrocarbon group.
[5] The Lubricating oil composition for compressors of the aforementioned [4], wherein in the metallocene compound represented by the above Formula 1, the hydrocarbon group ($R^2$ or $R^3$) bonded to the 3-position of the cyclopentadienyl group is an n-butyl group.
[6] The lubricating oil composition for compressors of any of the aforementioned [1] to [5], wherein in the metallocene compound represented by the above Formula 1, substituents ($R^6$ and $R^{11}$) bonded to the 2-position and 7-position of the fluorenyl group are all tert-butyl groups.
[7] The lubricating oil composition for compressors of any of the aforementioned [1] to [6], wherein the compound which reacts with the bridged metallocene compound to form an ion pair is a compound represented by the following Formula 6.

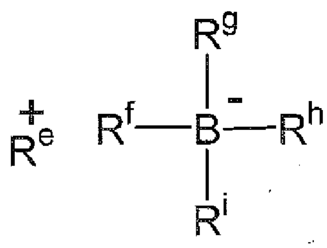

··· (Formula 6)

[In Formula 6, $R^{e+}$ is H+, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.]
[8] The lubricating oil composition for compressors of the aforementioned [7], wherein the ammonium cation is a dimethylanilinium cation.
[9] The lubricating oil composition for compressors of the aforementioned [7] or [8], wherein the catalyst system further comprises an organoaluminum compound selected from a group consisting of trimethyl aluminum and triisobutyl aluminum.
[10] The lubricating oil composition for compressor oils of any of the aforementioned [1] to [9], wherein the content of the liquid random copolymer (B) is 1 to 20% by mass.
[11] A lubricating oil composition for compressor oils, comprising

10 to 99% by mass of a lubricant base oil (A) having the properties of the below (A1) to (A3), and
90 to 1% by mass of a liquid random copolymer of ethylene and α-olefin, the liquid random copolymer having the properties of the below (B1) to (B5) (where the total amount of the lubricant base oil (A) and the copolymer

is 100% by mass), the lubricating oil composition for compressor oils having the property of the below (C1).

(A1) The lubricant base oil (A) has a kinematic viscosity at 100°C of 1 to 14 $mm^2/s$.
(A2) The lubricant base oil (A) has a viscosity index of 100 or more.
(A3) The lubricant base oil (A) has a pour point of 0°C or lower.
(B1) The liquid random copolymer comprises 40 to 60 mol% of ethylene units and 60 to 40 mol% of α-olefin units having 3 to 20 carbon atoms.
(B2) The liquid random copolymer has a number average molecular weight (Mn) of 500 to 10,000 and a molecular weight distribution (Mw/Mn, Mw is the weight average molecular weight) of 3 or less, as measured by Gel Permeation Chromatography (GPC).
(B3) The liquid random copolymer has a kinematic viscosity at 100°C of 30 to 5,000 $mm^2/s$.
(B4) The liquid random copolymer has a pour point of 30 to-45°C.
(B5) The liquid random copolymer has a Bromine Number of 0.1 g / 100 g or less.
(C1) The lubricating oil composition for compressor oils has a kinematic viscosity at 40°C of 10 to 300 $mm^2/s$.

[12] A lubricating oil composition for compressor oils according to any of the aforementioned [1] to [11], wherein the lubricant base oil (A) further satisfies the below (A4) to (A6).

(A4) The lubricant base oil (A) has a kinematic viscosity at 100°C of 1 to 10 $mm^2/s$.
(A5) The lubricant base oil (A) has a viscosity index of 110 or more.
(A6) The lubricant base oil (A) has a pour point of -10°C or lower.

[13] The lubricating oil composition for compressor oils according to any of the aforementioned [1] to [12], wherein 30 to 100% by mass of the lubricant base oil (A) is mineral oil.
[14] The lubricating oil composition for compressor oils according to any of the aforementioned [1] to [12], wherein 30 to 100% by mass of the lubricant base oil (A) is a synthetic oil, poly α olefin (PAO) and/or an ester oil.
[15] The lubricating oil composition for compressor oils according to any of the aforementioned [1] to [14], having a kinematic viscosity at 40°C of 20 to 100 $mm^2/s$.
[16] A rotary-type compressor oil, consisting of the lubricating oil composition for compressor oils according to any of the aforementioned [1] to [15].
[17] An oil-flooded screw compressor oil, consisting of the lubricating oil composition for compressor oils according to any of the aforementioned [1] to [15].
[18] A method for producing a lubricating oil composition for compressor oils, comprising the steps of:

preparing a liquid random copolymer (B) of ethylene and α-olefin by the following method (α); and
preparing a lubricating oil composition for compressor oils by mixing a lubricant base oil (A) in an amount of 10 to 99% by mass of the lubricating oil composition, the lubricant base oil (A) having the properties of the below (A1) to (A3), and the liquid random copolymer (B) in an amount of 90 to 1% by mass of the lubricating oil composition (where the total amount of the lubricant base oil (A) and the copolymer (B) is 100% by mass), the lubricating oil composition for compressor oils having the property of the below (C1).

(A1) The lubricant base oil (A) has a kinematic viscosity at 100°C of 1 to 14 $mm^2/s$.
(A2) The lubricant base oil (A) has a viscosity index of 100 or more.
(A3) The lubricant base oil (A) has a pour point of 0°C or lower.
(C1) The lubricating oil composition for compressor oils has a kinematic viscosity at 40°C of 10 to 300 $mm^2/s$.

(Method (α))
A method (α) for preparing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

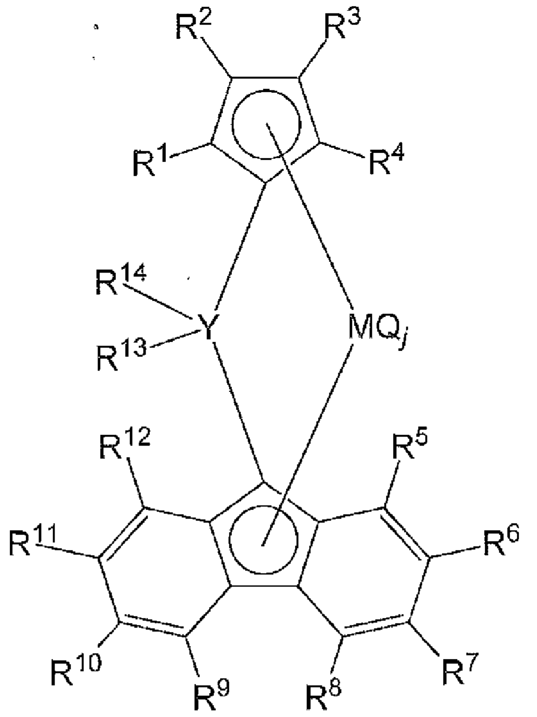

(Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Advantageous Effects of Invention

The lubricating oil composition for compressor oils of the present invention has remarkably excellent temperature viscosity properties; namely has oil film retention properties at high temperatures, as well as excellent low-temperature viscosity properties, and further has excellent thermal and oxidation stability. The lubricating oil composition is preferably applicable to compressor oil, and particularly to rotary-type compressor oil or oil-flooded screw compressor oils.

Description of Embodiments

The lubricating oil composition for compressor oils according to the present invention (hereinafter, also referred to merely as "lubricating oil composition") will be explained in detail below.

The lubricating oil composition for compressor oils according to the present invention comprises a lubricant base oil (A), and a liquid random copolymer (B) of ethylene and $\alpha$-olefin prepared by method ($\alpha$) (may also be described in the present specification as "ethylene-$\alpha$-olefin copolymer (B)"), the lubricating oil composition having a kinematic viscosity at 40°C in a specific range.

< (A) Lubricant base oil >

The lubricant base oil (A) has the properties of (A1) to (A3) below.

(A1) The lubricant base oil has a kinematic viscosity at 100°C of 1 to 14 $mm^2/s$

The value of this kinematic viscosity is that as measured in accordance with the method described in JIS K2283. The kinematic viscosity at 100°C of lubricant base oil (A) is 1 to 14 $mm^2/s$, preferably 1 to 10 $mm^2/s$, and more preferably 2 to 8 $mm^2/s$. With a kinematic viscosity at 100°C in this range, the lubricating oil composition of the present invention is excellent in terms of balance between volatility and temperature viscosity properties.

(A2) The lubricant base oil has a viscosity index of 100 or more

The value of this viscosity index is that as measured in accordance with the method described in JIS K2283. The viscosity index of lubricant base oil (A) is 100 or more, preferably 110 or more, and further preferably 120 or more. With a viscosity index in this range, the lubricating oil composition of the present invention has excellent temperature viscosity properties.

(A3) The lubricant base oil has a pour point of 0°C or lower

The value of this pour point is that as measured in accordance with the method described in ASTM D97. The pour point of lubricant base oil (A) is 0°C or lower, preferably -10°C or lower, more preferably -20°C or lower, and furthermore preferably -30°C or lower. With a pour point in this range, the lubricating oil composition of the present invention has excellent low-temperature viscosity properties.

In the lubricant base oil used in the present invention, performance and quality such as viscosity properties, heat resistance and oxidation stability, will differ depending on the producing and refining methods etc. of the lubricant base oil. In general, the lubricant base oil is classified broadly into a mineral oil and a synthetic oil. Moreover, the API (American Petroleum Institute) categorizes lubricant base oil into five types: Group I, II, III, IV and V. These API categories are defined in the API Publication 1509, 15th Edition, Appendix E, April 2002, which are as shown in Table 1. The lubricant base oil (A) may be either mineral oil or synthetic oil, and may be of any of the Groups I to V in the API categories. Details are described as follows.

Table 1

| Group | Type | Viscosity index *1 | Saturated hydrocarbon portion *2 (vol%) | Sulfur portion *3 (% by weight) |
|---|---|---|---|---|
| I | Mineral oil | 80 to 120 | < 90 | > 0.03 |
| II | Mineral oil | 80 to 120 | ≥ 90 | ≤ 0.03 |
| III | Mineral oil | ≥ 120 | ≥ 90 | ≤ 0.03 |
| IV | Poly-α-olefin | | | |
| V | Lubricant base material other than the aforementioned | | | |

*1: Measured in accordance with ASTM D445 (JIS K2283)
*2: Measured in accordance with ASTM D3238
*3: Measured in accordance with ASTM D4294 (JIS K2541)
*4: Mineral oils whose saturated hydrocarbon portion is less than 90 vol% and sulfur portion is less than 0.03% by weight, or whose saturated hydrocarbon portion is 90 vol% or more and sulfur portion exceeds 0.03% by weight, are included in Group I.

< Mineral oil >

The mineral oil is ascribed to Groups I to III of the aforementioned API categories.

The quality of the mineral oil is as mentioned above, where the aforementioned respective qualities of mineral oil are obtainable depending on the refining method. Exemplifications of the mineral oil specifically include: a lubricant base oil, in which a lubricating oil fraction obtained by reduced pressure distillation of an atmospheric residue which is obtainable by the atmospheric distillation of crude oil, is refined by one or more treatments such as solvent deasphalting, solvent extraction, hydrocracking, solvent dewaxing, hydrorefining; or a lubricant base oil of wax isomerized mineral oil.

Moreover, a Gas-to-Liquid (GTL) base oil obtained by the Fisher-Tropsch method is a base oil which can also be suitably utilized as Group III mineral oil. Such GTL base oil is also handled as Group III+ lubricant base oil, which are described e.g. in the following Patent Literatures: EP0776959, EP0668342, WO97/21788, WO00/15736, WO00/14188, WO00/14187, WO00/14183, WO00/14179, WO00/08115, WO99/41332, EP1029029, WO01/18156 and WO01/57166.

< Synthetic oil >

The synthetic oil is ascribed to Group IV or Group V of the aforementioned API categories.

Poly-α-olefins, which are ascribed to Group IV, can be obtained by oligomerizing higher α-olefins with an acid catalyst such as a boron trifluoride catalyst or a chromic acid catalyst, as described in US Patent No. 3,382,291, US Patent No. 3,763,244, US Patent No. 5,171,908, US Patent No. 3,780,128, US Patent No. 4,032,591, JP H01-163136 A, US Patent No. 4,967,032, and US Patent No. 4,926,004. Poly-α-olefins can also be obtained by processes using a catalyst system containing a complex of a transition metal such as zirconium, titanium or hafnium, which includes a metallocene compound as described in patent literatures, JP S63-37102 A, JP 2005-200447 A, JP 2005-200448 A, JP 2009-503147 A and JP 2009-501836 A. Of these, a low molecular weight oligomer of at least one olefin selected from an olefin having 6 or more carbon atoms can be utilized as the poly-α-olefin. If utilizing a poly-α-olefin as the lubricant base oil (A), a lubricating oil composition having remarkably excellent temperature viscosity properties, low-temperature viscosity properties, as well as excellent heat resistance is obtainable.

Poly-α-olefins are also industrially available, where those with a 100°C kinematic viscosity of 2 $mm^2/s$ to 150 $mm^2/s$ are commercially available. Among these, the use of a poly α-olefin of 2 to 14 $mm^2/s$ is preferable from the perspective of obtaining a lubricating oil composition with excellent temperature viscosity properties. Examples include the NEXBASE 2000 series (made by NESTE), Spectrasyn (made by ExxonMobil Chemical), Durasyn (made by Ineos Oligomers), and Synfluid (made by Chevron Phillips Chemical).

As the synthetic oil ascribed to Group V, examples include alkyl benzenes, alkyl naphthalenes, isobutene oligomers and hydrides thereof, paraffins, polyoxy alkylene glycol, dialkyl diphenylether, polyphenylether, and esters.

Most of the alkyl benzenes and alkyl naphthalenes are usually dialkyl benzene or dialkyl naphthalene whose alkyl chain length has 6 to 14 carbon atoms, where such alkyl benzenes or alkyl naphthalenes are produced by the Friedel-Crafts alkylation reaction of benzene or naphthalene with olefin. In the production of alkyl benzenes or alkyl naphthalenes, the alkylated olefin to be utilized may be a linear or branched olefin, or may be a combination of these. These production processes are described in e.g. US Patent 3,909,432.

Moreover, as the ester, fatty acid esters are preferred from the perspective of compatibility with the ethylene-α-olefin copolymer (B).

Although there are no particular limitations on the fatty acid esters, examples include fatty acid esters consisting of only carbon, oxygen or hydrogen as mentioned below, where the examples include monoesters prepared from a monobasic acid and alcohol; diesters prepared from dibasic acid and alcohol, or from a diol with a monobasic acid or an acid mixture; or polyolesters prepared by reacting a monobasic acid or an acid mixture with a diol, triol (e.g. trimethylolpropane), tetraol (e.g. pentaerythritol), hexol (e.g. dipentaerythritol) etc. Examples of these esters include ditridecyl glutarate, di-2-ethyl hexyl adipate, diisodecyl adipate, ditridecyl adipate, di-2-ethyl hexyl sebacate, tridecyl pelargonate, di-2-ethyl hexyl adipate, di-2-ethyl hexyl azelate, trimethylolpropane caprylate, trimethylolpropane pelargonate, trimethylolpropane triheptanoate, pentaerythritol-2-ethyl hexanoate, pentaerythritol pelargonate, and pentaerythritol tetraheptanoate.

From the perspective of the compatibility with the ethylene-α-olefin copolymer (B), an alcohol having two or more functional hydroxyl groups is preferred as the alcohol moiety constituting the ester, and a fatty acid having 8 or more carbon atoms is preferred as the fatty acid moiety. However, a fatty acid having 20 or fewer carbon atoms, which is easily industrially available, is superior in terms of the manufacturing cost of the fatty acid. The effect of the present invention is also sufficiently exhibited with the use of one fatty acid constituting an ester, or with the use of a fatty acid ester prepared by means of two or more acid mixtures. Examples of fatty acid esters more specifically include a mixed triester of trimethylolpropane with lauric acid and stearic acid, and diisodecyl adipate, where these are preferable in terms of compatibility of saturated hydrocarbon components such as the ethylene-α-olefin copolymer (B), with stabilizers such as antioxidants, corrosion preventing agents, anti-wear agents, friction modifying agents, pour point lowering agents, anti-rust agents and anti-foamers mentioned below and having a polar group.

When utilizing a synthetic oil, particularly a poly-α-olefin as the lubricant base oil (A), it is preferable that the lubricating oil composition of the present invention contain a fatty acid ester in an amount of 5 to 20% by mass with respect to 100% by mass of the entire weight of the lubricating oil composition. By containing a fatty acid ester of 5% by mass or more, good compatibility is obtainable with lubricating oil sealing material such as resins and elastomers inside the internal combustion engines and industrial machinery of all types. Specifically, swelling of the lubricating oil sealing material can be suppressed. From the perspective of oxidation stability or heat resistance, the amount of ester

is preferably 20% by mass or less. When mineral oil is contained in the lubricating oil composition, a fatty acid ester is not necessarily required, because the mineral oil *per se* has a swelling suppression effect of the lubricating oil sealing agent.

Synthetic oil is preferred in terms of superior heat resistance and temperature viscosity properties compared to mineral oil. In the lubricating oil composition of the present invention, a synthetic oil or mineral oil may be used alone as the lubricant base oil (A), or any mixture etc. of two or more lubricating oils selected from the synthetic oil and mineral oil may be used as the lubricant base oil (A).

< (B) Ethylene-α-olefin copolymer >

The ethylene-α-olefin copolymer (B) is a liquid random copolymer (B) of ethylene and α-olefin prepared by the following method (α).

(Method (α))

A method (α) for preparing a liquid random copolymer of ethylene and α-olefin, comprising a step of carrying out solution polymerization of ethylene and α-olefin having 3 to 20 carbon atoms, under a catalyst system containing

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

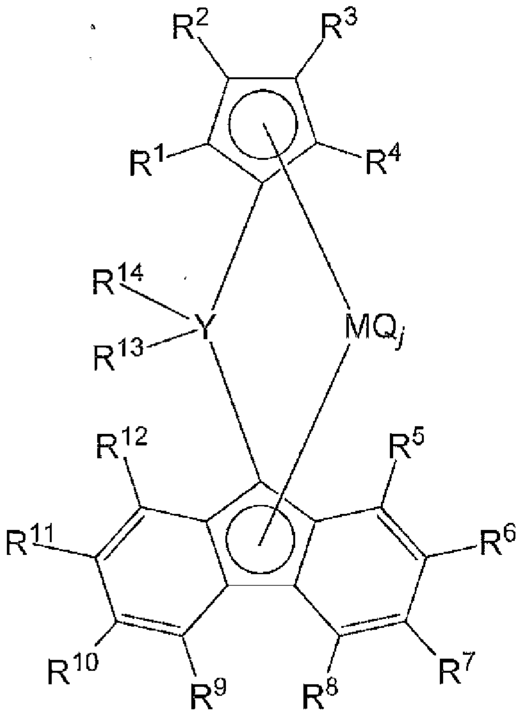

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;

$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Here, the hydrocarbon group has 1 to 20 carbon atoms, preferably 1 to 15 atoms, and more preferably 4 to 10 carbon atoms, and means for example an alkyl group, aryl group etc. The aryl group has 6 to 20 carbon atoms, and preferably 6 to 15 carbon atoms.
Examples of the silicon-containing hydrocarbon group include an alkyl or aryl group having 3 to 20 carbon atoms which contains 1 to 4 silicon atoms, and in more detail includes trimethylsilyl group, tert-butyldimethylsilyl group, triphenylsilyl group etc.
In the bridged metallocene compound represented by Formula 1, cyclopentadienyl group may be substituted or unsubstituted.
In the bridged metallocene compound represented by Formula 1,

(i) it is preferable that at least one among substituents ($R^1$, $R^2$, $R^3$ and $R^4$) bonded to cyclopentadienyl group is a hydrocarbon group,
(ii) it is more preferable that at least one among substituents ($R^1$, $R^2$, $R^3$ and $R^4$) is a hydrocarbon group having 4 or more carbon atoms,
(iii) it is most preferable that substituent ($R^2$ or $R^3$) bonded to the 3-position of the cyclopentadienyl group is a hydrocarbon group having 4 or more carbon atoms (for example an n-butyl group).

In case where at least two among $R^1$, $R^2$, $R^3$ and $R^4$ are substituents (that is, being not hydrogen atom), the above-mentioned substituents may be the same or be different, and it is preferable that at least one substituent is a hydrocarbon group having 4 or more carbon atoms.
In the metallocene compound represented by Formula 1, $R^6$ and $R^{11}$ bonded to fluorenyl group are the same, $R^7$ and $R^{10}$ are the same, but $R^6$, $R^7$, $R^{10}$ and $R^{11}$ are not hydrogen atom at the same time. In high-temperature solution polymerization of poly-$\alpha$-olefin, in order to improve the polymerization activity, preferably neither $R^6$ nor $R^{11}$ is hydrogen atom, and more preferably none of $R^6$, $R^7$, $R^{10}$ and $R^{11}$ is hydrogen atom. For example, $R^6$ and $R^{11}$ bonded to the 2-position and 7-position of the fluorenyl group are the same hydrocarbon group having 1 to 20 carbon atoms, and preferably all tert-butyl groups, and $R^7$ and $R^{10}$ are the same hydrocarbon group having 1 to 20 carbon atoms, and preferably all tert-butyl groups.
The main chain part (bonding part, Y) connecting the cyclopentadienyl group and the fluorenyl group is a cross-linking section of two covalent bonds comprising one carbon atom or silicon atom, as a structural bridge section imparting steric rigidity to the bridged metallocene compound represented by Formula 1. Cross-linking atom (Y) in the cross-linking section has two aryl groups ($R^{13}$ and $R^{14}$) which may be the same or different. Therefore, the cyclopentadienyl group and the fluorenyl group are bonded by the covalent bond cross-linking section containing an aryl group. Examples of the aryl group include a phenyl group, naphthyl group, anthracenyl group, and a substituted aryl group (which is formed by substituting one or more aromatic hydrogen ($sp^2$-type hydrogen) of a phenyl group, naphthyl group or anthracenyl group, with substituents). Examples of substituents in the aryl group include a hydrocarbon group having 1 to 20 carbon atoms, a silicon-containing hydrocarbon group having 1 to 20 carbon atoms, a halogen atom etc., and preferably include a phenyl group. In the bridged metallocene compound represented by Formula 1, preferably $R^{13}$ and $R^{14}$ are the same in view of easy production.
In the bridged metallocene compound represented by Formula 1, Q is preferably a halogen atom or hydrocarbon group having 1 to 10 carbon atoms. The halogen atom includes fluorine, chlorine, bromine or iodine. The hydrocarbon group having 1 to 10 carbon atoms includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexyl methyl, cyclohexyl, 1-methyl-1-cyclohexyl etc. Further, when j is an integer of 2 or more, Q may be the same or different.
Examples of such bridged metallocene compounds (a) include:

ethylene [$\eta^5$-(3-tert-butyl-5-methyl cyclopentadienyl)] ($\eta^5$-fluorenyl) zirconium dichloride, ethylene [$\eta^5$-(3-tert-butyl-5-methyl cyclopentadienyl)] [$\eta^5$-(3,6-di-tert-butyl fluorenyl)] zirconium dichloride, ethylene [$\eta^5$-(3-tert-butyl-5-methyl cyclopentadienyl)] [$\eta^5$-(2,7-di-tert-butyl fluorenyl)] zirconium dichloride, ethylene [$\eta^5$-(3-tert-butyl-5-methyl cyclopentadienyl)] (octamethyl octahydrodibenzofluorenyl) zirconium dichloride, ethylene [$\eta^5$-(3-tert-butyl-5-methyl cyclopentadienyl)] (benzofluorenyl) zirconium dichloride, ethylene [$\eta^5$-(3-tert-butyl-5-methyl cyclopentadienyl)] (dibenzofluorenyl) zirconium dichloride, ethylene [$\eta^5$-(3-tert-butyl-5-methyl cyclopentadienyl)] (octahydrodibenzofluorenyl) zir-

conium dichloride, ethylene [$\eta^5$-(3-tert-butyl-5-methyl cyclopentadienyl)] [$\eta^5$-(2,7-diphenyl-3,6-di-tert-butyl fluorenyl)] zirconium dichloride, ethylene [$\eta^5$-(3-tert-butyl-5-methyl cyclopentadienyl)] [$\eta^5$-(2,7-dimethyl-3,6-di-tert-butyl fluorenyl)] zirconium dichloride;

ethylene [$\eta^5$-(3-tert-butyl cyclopentadienyl)] ($\eta^5$-fluorenyl) zirconium dichloride, ethylene [$\eta^5$-(3-tert-butyl cyclopentadienyl)] [$\eta^5$-(3,6-di-tert-butyl fluorenyl)] zirconium dichloride, ethylene [$\eta^5$-(3-tert-butyl cyclopentadienyl)] [$\eta^5$-(2,7-di-tert-butyl fluorenyl)] zirconium dichloride, ethylene [$\eta^5$-(3-tert-butyl cyclopentadienyl)] (octamethyl octahydrodibenzofluorenyl) zirconium dichloride, ethylene [$\eta^5$-(3-tert-butyl cyclopentadienyl)] (benzofluorenyl) zirconium dichloride, ethylene [$\eta^5$-(3-tert-butyl cyclopentadienyl)] (dibenzofluorenyl) zirconium dichloride, ethylene [$\eta^5$-(3-tert-butyl cyclopentadienyl)] (octahydrodibenzofluorenyl) zirconium dichloride, ethylene [$\eta^5$-(3-tert-butyl cyclopentadienyl)] [$\eta^5$-(2,7-diphenyl-3,6-di-tert-butyl fluorenyl)] zirconium dichloride, ethylene [$\eta^5$-(3-tert-butyl cyclopentadienyl)] [$\eta^5$-(2,7-dimethyl-3,6-di-tert-butyl fluorenyl)] zirconium dichloride;

ethylene [$\eta^5$-(3-n-butyl cyclopentadienyl)] ($\eta^5$-fluorenyl) zirconium dichloride, ethylene [$\eta^5$-(3-n-butyl cyclopentadienyl)] [$\eta^5$-(3,6-di-tert-butyl fluorenyl)] zirconium dichloride, ethylene [$\eta^5$-(3-n-butyl cyclopentadienyl)] [$\eta^5$-(2,7-di-tert-butyl fluorenyl)] zirconium dichloride, ethylene [$\eta^5$-(3-n-butyl cyclopentadienyl)] (octamethyl octahydrodibenzofluorenyl) zirconium dichloride, ethylene [$\eta^5$-(3-n-butyl cyclopentadienyl)] (benzofluorenyl) zirconium dichloride, ethylene [$\eta^5$-(3-n-butyl cyclopentadienyl)] (dibenzofluorenyl) zirconium dichloride, ethylene [$\eta^5$-(3-n-butyl cyclopentadienyl)] (octahydrodibenzofluorenyl) zirconium dichloride, ethylene [$\eta^5$-(3-n-butyl cyclopentadienyl)] [$\eta^5$-(2,7-diphenyl-3,6-di-tert-butyl fluorenyl)] zirconium dichloride, ethylene [$\eta^5$-(3-n-butyl cyclopentadienyl)] [$\eta^5$-(2,7-dimethyl-3,6-di-tert-butyl fluorenyl)] zirconium dichloride;

diphenylmethylene [$\eta^5$-(3-tert-butyl-5-methyl cyclopentadienyl)] ($\eta^5$-fluorenyl) zirconium dichloride, diphenylmethylene [$\eta^5$-(3-tert-butyl-5-methyl cyclopentadienyl)] [$\eta^5$-(3,6-di-tert-butyl fluorenyl)] zirconium dichloride, diphenylmethylene [$\eta^5$-(3-tert-butyl-5-methyl cyclopentadienyl)] [$\eta^5$-(2,7-di-tert-butyl fluorenyl)] zirconium dichloride, diphenylmethylene [$\eta^5$-(3-tert-butyl-5-methyl cyclopentadienyl)] (octamethyl octahydrodibenzofluorenyl) zirconium dichloride, diphenylmethylene [$\eta^5$-(3-tert-butyl-5-methyl cyclopentadienyl)] (benzofluorenyl) zirconium dichloride, diphenylmethylene [$\eta^5$-(3-tert-butyl-5-methyl cyclopentadienyl)] (dibenzofluorenyl) zirconium dichloride, diphenylmethylene [$\eta^5$-(3-tert-butyl-5-methyl cyclopentadienyl)] (octahydrodibenzofluorenyl) zirconium dichloride, diphenylmethylene [$\eta^5$-(3-tert-butyl-5-methyl cyclopentadienyl)] [$\eta^5$-(2,7-diphenyl-3,6-di-tert-butyl fluorenyl)] zirconium dichloride, diphenylmethylene [$n^5$-(3-tert-butyl-5-methyl cyclopentadienyl)] [$\eta^5$-(2,7-dimethyl-3,6-di-tert-butyl fluorenyl)] zirconium dichloride;

diphenylmethylene [$\eta^5$-(3-tert-butyl cyclopentadienyl)] ($\eta^5$-fluorenyl) zirconium dichloride, diphenylmethylene [$\eta^5$-(3-tert-butyl cyclopentadienyl)] [$\eta^5$-(3,6-di-tert-butyl fluorenyl)] zirconium dichloride, diphenylmethylene [$\eta^5$-(3-tert-butyl cyclopentadienyl)] [$\eta^5$-(2,7-di-tert-butyl fluorenyl)] zirconium dichloride, diphenylmethylene [$\eta^5$-(3-tert-butyl cyclopentadienyl)] (octamethyl octahydrodibenzofluorenyl) zirconium dichloride, diphenylmethylene [$\eta^5$-(3-tert-butyl cyclopentadienyl)] (benzofluorenyl) zirconium dichloride, diphenylmethylene [$\eta^5$-(3-tert-butyl cyclopentadienyl)] (dibenzofluorenyl) zirconium dichloride, diphenylmethylene [$\eta^5$-(3-tert-butyl cyclopentadienyl)] (octahydrodibenzofluorenyl) zirconium dichloride, diphenylmethylene [$\eta^5$-(3-tert-butyl cyclopentadienyl)] [$\eta^5$-(2,7-diphenyl-3,6-di-tert-butyl fluorenyl)] zirconium dichloride, diphenylmethylene [$\eta^5$-(3-tert-butyl cyclopentadienyl)] [$\eta^5$-(2,7-dimethyl-3,6-di-tert-butyl fluorenyl)] zirconium dichloride;

diphenylmethylene [$\eta^5$-(3-n-butyl cyclopentadienyl)] ($\eta^5$-fluorenyl) zirconium dichloride, diphenylmethylene [$\eta^5$-(3-n-butyl cyclopentadienyl)] [$\eta^5$-(3,6-di-tert-butyl fluorenyl)] zirconium dichloride, diphenylmethylene [$\eta^5$-(3-n-butyl cyclopentadienyl)] [$\eta^5$-(2,7-di-tert-butyl fluorenyl)] zirconium dichloride, diphenylmethylene [$\eta^5$-(3-n-butyl cyclopentadienyl)] (octamethyl octahydrodibenzofluorenyl) zirconium dichloride, diphenylmethylene [$\eta^5$-(3-n-butyl cyclopentadienyl)] (benzofluorenyl) zirconium dichloride, diphenylmethylene [$\eta^5$-(3-n-butyl cyclopentadienyl)] (dibenzofluorenyl) zirconium dichloride, diphenylmethylene [$\eta^5$-(3-n-butyl cyclopentadienyl)] (octahydrodibenzofluorenyl) zirconium dichloride, diphenylmethylene [$\eta^5$-(3-n-butyl cyclopentadienyl)] [$\eta^5$-(2,7-diphenyl-3,6-di-tert-butyl fluorenyl)] zirconium dichloride, diphenylmethylene [$\eta^5$-(3-n-butyl cyclopentadienyl)] [$\eta^5$-(2,7-dimethyl-3,6-di-tert-butyl fluorenyl)] zirconium dichloride;

di(p-tolyl) methylene [$\eta^5$-(3-tert-butyl-5-methyl cyclopentadienyl)] ($\eta^5$-fluorenyl) zirconium dichloride, di(p-tolyl) methylene [$\eta^5$-(3-tert-butyl-5-methyl cyclopentadienyl)] [$\eta^5$-(3,6-di-tert-butyl fluorenyl)] zirconium dichloride, di(p-tolyl) methylene [$\eta^5$-(3-tert-butyl-5-methyl cyclopentadienyl)] [$\eta^5$-(2,7-di-tert-butyl fluorenyl)] zirconium dichloride, di(p-tolyl) methylene [$\eta^5$-(3-tert-butyl-5-methyl cyclopentadienyl)] (octamethyl octahydrodibenzofluorenyl) zirconium dichloride, di(p-tolyl) methylene [$\eta^5$-(3-tert-butyl-5-methyl cyclopentadienyl)] (benzofluorenyl) zirconium dichloride, di(p-tolyl) methylene [$\eta^5$-(3-tert-butyl-5-methyl cyclopentadienyl)] (dibenzofluorenyl) zirconium dichloride, di(p-tolyl) methylene [$\eta^5$-(3-tert-butyl-5-methyl cyclopentadienyl)] (octahydrodibenzofluorenyl) zirconium dichloride, di(p-tolyl) methylene [$\eta^5$-(3-tert-butyl-5-methyl cyclopentadienyl)] [$\eta^5$-(2,7-diphenyl-3,6-di-tert-butyl fluorenyl)] zirconium dichloride, di(p-tolyl) methylene [$\eta^5$-(3-tert-butyl-5-methyl cyclopentadienyl)] [$\eta^5$-(2,7-dimethyl-3,6-di-tert-butyl fluorenyl)] zirconium dichloride;

di(p-tolyl) methylene [$\eta^5$-(3-tert-butyl cyclopentadienyl)] ($\eta^5$-fluorenyl) zirconium dichloride, di(p-tolyl) methylene

[$\eta^5$-(3-tert-butyl cyclopentadienyl)] [$\eta^5$-(3,6-di-tert-butyl fluorenyl)] zirconium dichloride, di(p-tolyl) methylene [$\eta^5$-(3-tert-butyl cyclopentadienyl)] [$\eta^5$-(2,7-di-tert-butyl fluorenyl)] zirconium dichloride, di(p-tolyl) methylene [$\eta^5$-(3-tert-butyl cyclopentadienyl)] (octamethyl octahydrodibenzofluorenyl) zirconium dichloride, di(p-tolyl) methylene [$\eta^5$-(3-tert-butyl cyclopentadienyl)] (benzofluorenyl) zirconium dichloride, di(p-tolyl) methylene [$\eta^5$-(3-tert-butyl cyclopentadienyl)] (dibenzofluorenyl) zirconium dichloride, di(p-tolyl) methylene [$\eta^5$-(3-tert-butyl cyclopentadienyl)] (octahydrodibenzofluorenyl) zirconium dichloride, di(p-tolyl) methylene [$\eta^5$-(3-tert-butyl cyclopentadienyl)] [$\eta^5$-(2,7-diphenyl-3,6-di-tert-butyl fluorenyl)] zirconium dichloride, di(p-tolyl) methylene [$\eta^5$-(3-tert-butyl cyclopentadienyl)] [$\eta^5$-(2,7-dimethyl-3,6-di-tert-butyl fluorenyl)] zirconium dichloride; and

di(p-tolyl) methylene [$\eta^5$-(3-n-butyl cyclopentadienyl)] ($\eta^5$-fluorenyl) zirconium dichloride, di(p-tolyl) methylene [$\eta^5$-(3-n-butyl cyclopentadienyl)] [$\eta^5$-(3,6-di-tert-butyl fluorenyl)] zirconium dichloride, di(p-tolyl) methylene [$\eta^5$-(3-n-butyl cyclopentadienyl)] [$\eta^5$-(2,7-di-tert-butyl fluorenyl)] zirconium dichloride, di(p-tolyl) methylene [$\eta^5$-(3-n-butyl cyclopentadienyl)] (octamethyl octahydrodibenzofluorenyl) zirconium dichloride, di(p-tolyl) methylene [$\eta^5$-(3-n-butyl cyclopentadienyl)] (benzofluorenyl) zirconium dichloride, di(p-tolyl) methylene [$\eta^5$-(3-n-butyl cyclopentadienyl)] (dibenzofluorenyl) zirconium dichloride, di(p-tolyl) methylene [$\eta^5$-(3-n-butyl cyclopentadienyl)] (octahydrodibenzofluorenyl) zirconium dichloride, di(p-tolyl) methylene [$\eta^5$-(3-n-butyl cyclopentadienyl)] (2,7-diphenyl-3,6-di-tert-butyl fluorenyl) zirconium dichloride, di(p-tolyl) methylene [$\eta^5$-(3-n-butyl cyclopentadienyl)] [$\eta^5$-(2,7-dimethyl-3,6-di-tert-butyl fluorenyl)] zirconium dichloride.

Although compounds whose zirconium atoms were substituted with hafnium atoms, or compounds whose chloro ligands were substituted with methyl groups etc. are exemplified in these compounds, the bridged metallocene compound (a) is not limited to these exemplifications.

As the organoaluminum oxy-compound used in the catalyst system in the present invention, conventional aluminoxane can be used. For example, linear or ring type aluminoxane represented by the following Formulas 2 to 5 can be used. A small amount of organic aluminum compound may be contained in the organoaluminum oxy-compound.

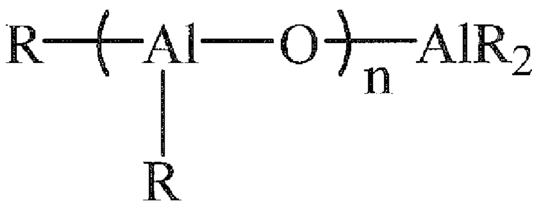

··· (Formula 2)

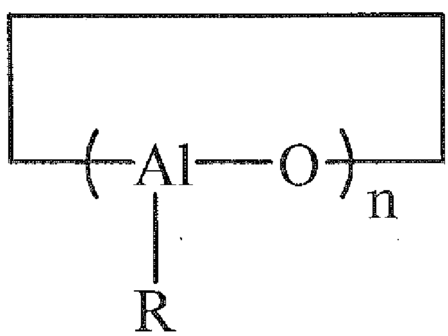

··· (Formula 3)

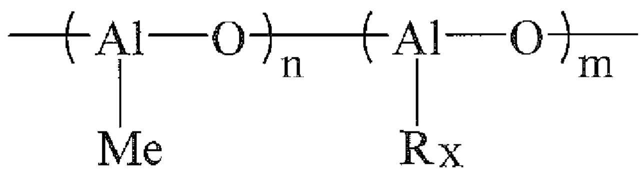

··· (Formula 4)

In Formulae 2 to 4, R is independently a hydrocarbon group having 1 to 10 carbon atoms, Rx is independently a hydrocarbon group having 2 to 20 carbon atoms, m and n are independently an integer of 2 or more, preferably 3 or more, more preferably 10 to 70, and most preferably 10 to 50.

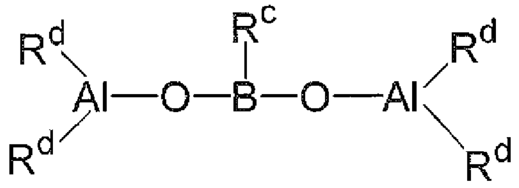

··· (Formula 5)

In Formula 5, $R^c$ is a hydrocarbon group having 1 to 10 carbon atoms, and $R^d$ is independently a hydrogen atom, halogen atom or hydrocarbon group having 1 to 10 carbon atoms.

In Formula 2 or Formula 3, R is a methyl group (Me) of the organoaluminum oxy-compound which is conventionally referred to as "methylaluminoxane".

The methylaluminoxane is easily available and has high polymerization activity, and thus it is commonly used as an activator in the polyolefin polymerization. However, the methylaluminoxane is difficult to dissolve in a saturated hydrocarbon, and thus it has been used as a solution of aromatic hydrocarbon such as toluene or benzene, which is environmentally undesirable. Therefore, in recent years, a flexible body of methylaluminoxane represented by Formula 4 has been developed and used as an aluminoxane dissolved in the saturated hydrocarbon. The modified methylaluminoxane represented by Formula 4 is prepared by using a trimethyl aluminum and an alkyl aluminum other than the trimethyl aluminum as shown in US Patent 4960878 and US Patent 5041584, and for example, is prepared by using trimethyl aluminum and triisobutyl aluminum. The aluminoxane in which Rx is an isobutyl group is commercially available under the trade name of MMAO and TMAO, in the form of a saturated hydrocarbon solution. (See Tosoh Finechem Corporation, Tosoh Research & Technology Review, Vol 47, 55 (2003)).

As (ii) the compound which reacts with the bridged metallocene compound to form an ion pair (hereinafter, referred to as "ionic compound" as required) which is contained in the present catalyst system, a Lewis acid, ionic compounds, borane, borane compounds and carborane compounds can be used. These are described in patent literatures, Korean Patent No. 10-551147 A, JP H01-501950 A, JP H03-179005 A, JP H03-179006 A, JP H03-207703 A, JP H03-207704 A, US Patent 5321106 and so on. If needed, heteropoly compounds, and isopoly compound etc. can be used, and the ionic compound disclosed in JP 2004-51676 A can be used. The ionic compound may be used alone or by mixing two or more. In more detail, examples of the Lewis acid include the compound represented by $BR_3$ (R is fluoride, substituted or unsubstituted alkyl group having 1 to 20 carbon atoms (methyl group, etc.), substituted or unsubstituted aryl group having 6 to 20 carbon atoms (phenyl group, etc.), and also includes for example, trifluoro boron, triphenyl boron, tris(4-fluorophenyl) boron, tris(3,5-difluorophenyl) boron, tris(4-fluorophenyl) boron, tris(pentafluorophenyl) and boron tris(p-tolyl) boron. When the ionic compound is used, its use amount and sludge amount produced are relatively small in comparison with the organoaluminum oxy-compound, and thus it is economically advantageous. In the present invention, it is preferable that the compound represented by the following Formula 6 is used as the ionic compound.

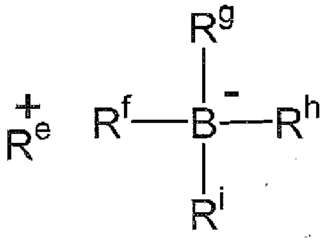

··· (Formula 6)

In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently an organic group, preferably a hydrocarbon group having 1 to 20 carbon atoms, and more preferably an aryl group, for example, a penta-fluorophenyl group. Examples of the carbenium cation include a tris(methylphenyl)carbenium cation and a tris(dimethylphenyl)carbenium cation, and examples of the ammonium cation include a dimethylanilinium cation.

Examples of compounds represented by the aforementioned Formula 6 preferably include N,N-dialkyl anilinium salts, and specifically include N,N-dimethylanilinium tetraphenylborate, N,N-dimethylanilinium tetrakis (pentafluorophenyl) borate, N,N-dimethylanilinium tetrakis (3,5-ditrifluoro methylphenyl) borate, N,N-diethyl anilinium tetraphenylborate, N,N-diethyl anilinium tetrakis (pentafluorophenyl) borate, N,N-diethyl anilinium tetrakis (3,5-ditrifluoro methylphenyl) borate, N,N-2,4,6-penta methylanilinium tetraphenylborate, and N,N-2,4,6-penta methylanilinium tetrakis (pentafluorophenyl) borate.

The catalyst system used in the present invention further includes (c) an organoaluminum compound when it

is needed. The organoaluminum compound plays a role of activating the bridged metallocene compound, the organoaluminum oxy-compound, and the ionic compound, etc. As the organoaluminum compound, preferably an organoaluminum represented by the following Formula 7, and alkyl complex compounds of the Group 1 metal and aluminum represented by the following Formula 8 can be used.

$$R^a{}_mAl(OR^b)_nH_pX_q \ldots \qquad \text{Formula 7}$$

In Formula 7, $R^a$ and $R^b$ each is independently a hydrocarbon group having 1 to 15 carbon atoms, preferably 1 to 4 carbon atoms, and X is a halogen atom, m is an integer of $0<m\leq3$, n is an integer of $0\leq n\leq3$, p is an integer of $0<p\leq3$, q is an integer of $0\leq q<3$, and $m+n+p+q=3$.

$$M^2AlR^a{}_4 \ldots \qquad \text{Formula 8}$$

In Formula 8, $M^2$ represents Li, Na or K, and $R^a$ is a hydrocarbon group having 1 to 15 carbon atoms, and preferably 1 to 4 carbon atoms.

Examples of the organoaluminum compound represented by Formula 7 include trimethyl aluminum and triisobutyl aluminum etc., which are easily available. Examples of the alkyl complex compounds of Group 1 metal and aluminum represented by Formula 8 include $LiAl(C_2H_5)_4$, $LiAl(C_7H_{15})_4$ etc. Compounds similar to the compounds represented by Formula 7 can be used. For example, like $(C_2H_5)_2AlN(C_2H_5)Al(C_2H_5)_2$, an organoaluminum compound to which at least 2 aluminum compounds are bonded through nitrogen atoms, can be used.

In the method for preparing the ethylene-α-olefin copolymer (B), the amount of (a) the bridged metallocene compound represented by Formula 1 is preferably 5 to 50% by weight with respect to total catalyst composition. Moreover, preferably the amount of (b) (i) the organoaluminum oxy-compound is 50 to 500 equivalent weight with respect to the molar number of the bridged metallocene compound to be used, the amount of (b) (ii) the compound which reacts with the bridged metallocene compound to form an ion pair is 1 to 5 equivalent weight with respect to the molar number of bridged metallocene compound to be used, and the amount of (c) the organoaluminum compound is 5 to 100 equivalent weight with respect to the molar number of the bridged metallocene compound to be used.

The catalyst system used in the present invention may have the following [1] to [4] for example.

[1] (a) the bridged metallocene compound represented by Formula 1, and (b) (i) the organoaluminum oxy-compound.
[2] (a) the bridged metallocene compound represented by Formula 1, (b) (i) the organoaluminum oxy-compound and (c) the organoaluminum compound.
[3] (a) the bridged metallocene compound represented by Formula 1, (b) (ii) the compound which reacts with the bridged metallocene compound to form an ion pair, and (c) the organoaluminum compound.
[4] (a) the bridged metallocene compound represented by Formula 1, and (b) (i) the organoaluminum oxy-compound and (ii) the compound which reacts with the bridged metallocene compound to form an ion pair.

(a) The bridged metallocene compound represented by Formula 1 (element (a)), (b) (i) the organoaluminum oxy-compound (element (b)), (ii) the compound which reacts with the bridged metallocene compound to form an ion pair and/or (c) the organoaluminum compound (element (c)) may be introduced in any order, to a starting raw material monomer (a mixture of ethylene and α-olefin having 3 to 20 carbon atoms). For example, elements (a), (b) and/or (c) are introduced alone or in any order, to a polymerization reactor with which raw material monomer is filled. Alternatively, if required, at least two elements among (a), (b) and/or (c) are mixed and then the mixed catalyst composition is introduced to the polymerization reactor with which raw material monomer is filled.

The ethylene-α-olefin copolymer (B) is prepared by a solution polymerization of ethylene and α-olefin having 3 to 20 carbon atoms under the catalyst system. As the α-olefin having 3 to 20 carbon atoms, one or more among linear α-olefins such as propylene, 1-butene, 1-penetene, 1-hexene etc., branched α-olefins such as isobutylene, 3-methyl-1-butene, 4-methyl-1-penetene etc. and mixtures thereof can be used. Preferably, one or more α-olefins having 3 to 6 carbon atoms can be used, and more preferably, propylene can be used. The solution polymerization can be carried out by using an inert solvent such as propane, butane or hexane etc. or an olefin monomer itself as a medium. In the copolymerization of ethylene and α-olefin of the present invention, the temperature for the copolymerization is conventionally 80 to 150°C and preferably 90 to 120°C, and the pressure for the copolymerization is conventionally atmospheric pressure to 500 kgf/cm$^2$ and preferably atmospheric pressure to 50 kgf/cm$^2$, which can vary in accordance with reacting materials, reacting conditions, etc.

Batch-, semi-continuous- or continuous-type polymerization can be carried out, and continuous-type polymerization is preferably carried out.

The ethylene-α-olefin copolymer (B) is in liquid phase at room temperature, and has a structure where the α-olefin units are uniformly distributed in the copolymer chain. The ethylene-α-olefin copolymer (B) comprises e.g. 60 to 40 mol%, preferably 45 to 55 mol%, of ethylene units derived from ethylene, and further comprises e.g. 40 to 60 mol%, preferably 45 to 55 mol%, of α-olefin units having 3 to 20 carbon atoms which are derived from α-olefin having 3 to 20 carbon atoms.

The number average molecular weight (Mn) of the ethylene-α-olefin copolymer (B) is e.g. 500 to 10,000 and preferably 800 to 6,000, and the molecular weight distribution (Mw/Mn, Mw is weight average molecular weight) is e.g. 3 or less and preferably 2 or less. The number average molecular weight (Mn) and the molecular weight distribution (Mw/Mn) are measured by gel permeation chromatography (GPC).

The ethylene-α-olefin copolymer (B) has a kinematic viscosity at 100°C of e.g. 30 to 5,000 and preferably 50 to 3,000 $mm^2/s$, a pour point of e.g. 30 to -45°C and preferably 20 to -35°C, and a Bromine Number of 0.1 g / 100 g or less.

In the bridged metallocene compound represented by Formula 1, the polymerization activity is particularly high with respect to the copolymerization of ethylene with α-olefin. Utilizing this bridged metallocene compound selectively stops polymerization by hydrogen introduction at the molecular terminals, and thus there is little unsaturated bonding of the resulting ethylene-α-olefin copolymer (B). Moreover, since the ethylene-α-olefin copolymer (B) has a high random copolymerization, it has a controlled molecular weight distribution, and thus has excellent shear stability and viscosity properties. Therefore, it is considered that the lubricating oil composition for compressors of the present invention containing the ethylene-α-olefin copolymer (B) has remarkably excellent temperature viscosity properties, namely, has oil film retention properties at high temperatures and low-temperature viscosity properties, and further has excellent thermal and oxidation stability.

< Lubricating oil composition for compressor oils >

The lubricating oil composition for compressor oils according to the present invention contains the lubricant base oil (A) and the ethylene-α-olefin copolymer (B), where the lubricating oil composition for compressor oils has the property of the below (C1).

(C1) The lubricating oil composition for compressor oils has a kinematic viscosity at 40°C of 10 to 300 $mm^2/s$

The kinematic viscosity at 40°C (i.e. the kinematic viscosity as measured in accordance with the method described in JIS K2283) is 10 to 300 $mm^2/s$, preferably 20 to 250 $mm^2/s$, more preferably 20 to 200 $mm^2/s$, and furthermore preferably 20 to 100 $mm^2/s$. If the kinematic viscosity at 40°C of the lubricating oil composition for compressor oils is much more than 300 $mm^2/s$, the agitation torque rises when stirring the lubricating oil composition, and hence the energy conservation performance of the compressor worsens. However, if the kinematic viscosity at 40°C is much lower than 10 $mm^2/s$, the oil film retention of the lubricating oil composition cannot be maintained, and hence sufficient lubricity is not obtainable.

In general, the viscosity of industrial lubricating oil products is stipulated according to 40°C kinematic viscosity, and viscosity ranges are defined by JIS K2001 (in accordance with ISO3448). The tolerance range is set at ±10% for each viscosity. For example, if a lubricating oil with a 40°C kinematic viscosity of 68 $mm^2/s$ is indicated as ISO VG68, the permitted range of the 40°C kinematic viscosity is 61.2 to 74.8 $mm^2/s$. Although the optimal range differs depending on the type of compressor as well as usage conditions, ISO VG32 to ISO VG220 is preferably utilized for compressor oil. When comparing performance, lubricating oil compositions of equal viscosity grades are usually compared.

The lubricating oil composition for compressor oils according to the present invention preferably further has the property (C2).

(C2) The lubricating oil composition for compressor oils has a viscosity index of 120 or more

This viscosity index (i.e. as measured in accordance with the method described in JIS K2283) is preferably 120 or more, more preferably 130 or more, furthermore preferably 140 or more, and particularly preferably 150 or more. With a viscosity index in this range, the lubricating oil composition has excellent temperature viscosity properties, and a balance can be found between the aforementioned energy conservation and lubricity, in a wide range of temperatures.

The pour point of the lubricating oil composition for compressor oils according to the present invention (i.e. the pour point as measured by the method described in ASTM D97) is preferably -20°C or lower, preferably -30°C or lower, and furthermore preferably -40°C or lower. A low pour point indicates a lubricating oil composition with excellent low-temperature properties.

The lubricating oil composition for compressor oils of the present invention contains the components in the ratio of 10 to 99% by mass of the lubricant base oil (A), and 90 to 1% by mass of the ethylene-α-olefin copolymer (B),

where the total of the lubricant base oil (A) and the ethylene-α-olefin copolymer (B) is 100% by mass. The lubricating oil composition for compressor oils of the present invention contains the components in the ratios of: preferably 50 to 99% by mass of the lubricant base oil (A) and 50 to 1% by mass of the ethylene-α-olefin copolymer (B); more preferably 70 to 99% by mass of the lubricant base oil (A) and 30 to 1% by mass of the ethylene-α-olefin copolymer (B); and furthermore preferably 80 to 99% by mass of the lubricant base oil (A) and 20 to 1% by mass of the ethylene-α-olefin copolymer (B).

A preferable aspect includes that 30 to 100% by mass of a lubricant base oil is a mineral oil. With a high ratio of the mineral oil in the lubricant base oil (A), there is excellent dissolvability of the below-mentioned additives, as well as superior economy since the mineral oil is easily obtained. It is more preferable for 50 to 100% by mass to be the mineral oil, and furthermore preferable for 80 to 100% by mass to be the mineral oil. Of the mineral oils, those of Group III in the API category are preferable because of excellent temperature viscosity properties, and because a balance can be found between oil film retention at high temperatures and low torque at low temperatures.

Another preferable aspect includes that 30 to 100% by mass of a lubricant base oil is a synthetic oil, and the synthetic oil is a poly-α-olefin and/or an ester oil. It is more preferable that 50 to 100% by mass is a synthetic oil, and furthermore preferable that 80 to 100% by mass is a synthetic oil. A high ratio of the synthetic oil in the lubricant base oil (A) is preferable because of excellent heat resistance, temperature viscosity properties and low-temperature properties.

Moreover, additives such as extreme pressure agents, detergent dispersants, viscosity index improving agents, antioxidants, corrosion preventing agents, anti-wear agents, friction modifying agents, pour point lowering agents, anti-rust agents and anti-foamers may be contained in the lubricating oil composition for compressor oils of the present invention.

Below are exemplifications of additives which can be utilized in the lubricating oil composition of the present invention, where these can be used alone, or used in combination of two or more.

The extreme pressure agent is the generic name for agents having a seizure preventing effect when metals are exposed to a high load condition, and although there are no particular limitations on the agent, sulfur-based extreme pressure agents such as sulfides, sulfoxides, sulfones, thiophosphinates, thiocarbonates, sulfurized oils and sulfurized olefins; phosphoric acids such as phosphate esters, phosphite esters, phosphate ester amine salts, and phosphite ester amines; and halogen-based compounds such as chlorinated hydrocarbons can be exemplified. Moreover, two or more types of these compounds may be used together.

Until extreme pressure lubricating conditions are attained, hydrocarbon or other organic components constituting lubricating oil composition may become carbonized before reaching extreme pressure lubricating conditions due to heating or shearing, and thus there is a possibility that a carbide film could be formed on a metal surface. Therefore, with the use of the extreme pressure agent alone, contact of a metal surface with the extreme pressure agent could be inhibited due to the carbide film, and thus a possibility that a sufficient effect of the extreme pressure agent cannot be expected.

Although the extreme pressure agents may be added alone, because a saturated hydrocarbon such as the copolymer constitutes a main component in the lubricating oil composition for compressor oils in the present invention, from the perspective of dispersibility, it is preferable to add the agent to the lubricant base oil such as mineral oil or synthetic hydrocarbon oil, together with the other additives to be used, in a dissolved state beforehand. Specifically, more preferable is a method of selecting the so-called additive package to be added to the lubricating oil composition, in which the various components such as the extreme pressure agent components are mixed in advance, and further dissolved in the lubricant base oil such as mineral oil or synthetic hydrocarbon oil.

Preferred additive packages include Anglamol-98A, Anglamol-6043, Angramol 6085U and LUBRIZOL 1047U (made by LUBRIZOL), HITEC 1532 (made by AFTON CHEMICAL), HITEC 307 (made by AFTON CHEMICAL), HITEC 3339 (made by AFTON CHEMICAL), and Additin RC 9410 (made by RHEIN CHEMIE).

The extreme pressure agents may be used as required in a range of 0 to 10% by mass, to 100% by mass of the lubricating oil composition.

Exemplifications of the anti-wear agent include inorganic or organic molybdenum compounds such as molybdenum disulfide, graphite, antimony sulfide, and polytetrafluoroethylene. The anti-wear agents may be used as required in a range of 0 to 3% by mass with respect to 100% by mass of the lubricating oil composition.

Exemplifications of the friction modifying agent include amine compounds, imide compound, fatty acid esters, fatty acid amides, and fatty acid metal salts having at least one alkyl group or alkenyl group having 6 to 30 carbon atoms, particularly linear alkyl groups or linear alkenyl groups having 6 to 30 carbon atoms, in a molecule.

Exemplifications of the amine compound include a linear- or branched-, preferably linear-, aliphatic monoamine, or a linear- or branched-, preferably linear-, aliphatic polyamine having 6 to 30 carbon atoms, or alkylene oxide adducts of these aliphatic amines. Examples of the imide compound include imide succinate with linear- or branched- alkyl group or alkenyl group having 6 to 30 carbon atoms and/or compounds thereof modified by a carboxylic acid, boric acid, phosphoric acid, sulfuric acid etc. Exemplifications of the fatty acid ester include esters of a linear- or branched-, preferably

linear-, fatty acid having 7 to 31 carbon atoms with an aliphatic monohydric alcohol or aliphatic polyhydric alcohol. Exemplifications of the fatty acid amide include amides of a linear- or branched-, preferably linear-, fatty acid having 7 to 31 carbon atoms with an aliphatic monoamine or aliphatic polyamine. Examples of fatty acid metal salts include alkaline-earth metal salts (e.g. magnesium salts and calcium salts) and zinc salts of a linear- or branched-, preferably linear-, fatty acid having 7 to 31 carbon atoms.

The friction modifying agents may be used as required in a range of 0.01 to 5.0% by mass with respect to 100% by mass of the lubricating oil composition.

Exemplifications of the detergent dispersants include metal sulfonates, metal phenates, metal phosphonates, and imide succinate. The detergent dispersants may be used as required in a range of 0 to 15% by mass with respect to 100% by mass of the lubricating oil composition.

In addition to ethylene-α-olefin copolymers (excluding the ethylene-α-olefin copolymer (B), known viscosity index improving agents such as olefin copolymers whose molecular weights exceed 50,000, methacrylate-based copolymers, liquid polybutene, and poly-α-olefins with a 100°C kinematic viscosity of 15 $mm^2/s$ or more can be used together as the viscosity index improving agent. The viscosity index improving agents may be used as required in a range of 0 to 50% by mass with respect to 100% by mass of the lubricating oil composition.

Examples of the antioxidant include phenol-based or amine-based compounds such as 2,6-di-t-butyl-4-methylphenol. The antioxidants may be used as required in a range of 0 to 3% by mass with respect to 100% by mass of the lubricating oil composition.

Examples of the corrosion preventing agent include compounds such as benzotriazole, benzoimidazole, and thiadiazole. The corrosion preventing agent may be used as required in a range of 0 to 3% by mass with respect to 100% by mass of the lubricating oil composition.

Examples of the anti-rust agent include compounds such as amine compounds, carboxylic acid metal salts, polyhydric alcohol esters, phosphorus compounds, and sulfonates. The anti-rust agent may be used as required in a range of 0 to 3% by mass with respect to 100% by mass of the lubricating oil composition.

Exemplifications of the anti-foamer include siliconebased compounds such as dimethyl siloxane and silica gel dispersions, and alcohol- or ester-based compounds. The anti-foamer may be used as required in a range of 0 to 0.2% by mass with respect to 100% by mass of the lubricating oil composition.

A variety of known pour point lowering agents may be used as the pour point lowering agent. Specifically, high molecular compounds containing an organic acid ester group may be used, and in particular, vinyl polymers containing an organic acid ester group are suitably used. Examples of the vinyl polymers containing an organic acid ester group include (co)polymers of methacrylic acid alkyl, (co)polymers of acrylic acid alkyl, (co)polymers of fumaric acid alkyl, (co)polymers of maleic acid alkyl, and alkylated naphthalene.

Such pour point lowering agents have a melting point of -13°C or lower, preferably -15°C, and furthermore preferably -17°C or lower. The melting point of the pour point lowering agent is measured by means of differential scanning calorimetry (DSC). Specifically, a sample of about 5 mg is packed into an aluminum pan and temperature is raised to 200°C, where the temperature is maintained at 200°C for 5 minutes. This is then cooled at 10°C/minute until reaching - 40°C, where the temperature is maintained at -40°C for 5 minutes. The temperature is then raised at 10°C/minute during which the melting point is obtained from the heat absorption curve.

The pour point lowering agent has a polystyrene conversion weight average molecular weight obtainable by gel permeation chromatography in the range of 20,000 to 400,000, preferably 30,000 to 300,000, more preferably 40,000 to 200,000.

A pour point lowering agent may be used as required in a range of 0 to 2% by mass with respect to 100% by mass of the lubricating oil composition.

In addition to the aforementioned additives, antiemulsifying agents, coloring agents, oiliness agents (oiliness improving agents) and the like may also be used as required.

< Use >

The lubricating oil composition of the present invention can be suitably utilized in the compressor oil of a variety of industrial equipment machinery, and this composition has remarkably excellent temperature viscosity properties; namely, oil film retention properties at high temperatures and low-temperature viscosity properties, and can greatly contribute to the energy conservation of compressors. The lubricating oil composition of the present invention is suited to rotary-type compressor oils, and is particularly suited to oil-flooded screw compressor oils.

## Examples

The present invention is further specifically explained based on the below Examples. However, the present invention is not limited to these Examples.

[Evaluation method]

In the below Examples and Comparative Examples etc., the physical properties etc. of the ethylene-α-olefin copolymer and the compressor oil were measured by the below methods.

< Ethylene content (mol%) >

Using a Fourier transform infrared spectrometer FT/IR-610 or FT/IR-6100 (made by JASCO), the absorbance ratio of the absorption in the vicinity of 721 $cm^{-1}$ based on the horizontal vibration of the long chain methylene group, and the absorption in the vicinity of 1155 $cm^{-1}$ based on the skeletal vibration of propylene (D1155 $cm^{-1}$ / D721 $cm^{-1}$) was calculated, and the ethylene content (% by weight) was obtained by the calibration curve created beforehand (created using the ASTM D3900 reference sample). Using the ethylene content (% by weight) thus obtained, the ethylene content (mol%) was obtained according to the following Formula.

$$\text{Ethylene content (mol\%)} = \frac{[\text{ethylene content (\% by weight)} / 28]}{[\text{ethylene content (\% by weight)} / 28] + [\text{propylene content (\% by weight)} / 42]}$$

< B-value >

Employing o-dichloro benzene / benzene-$d_6$ (4/1 [vol/vol%]) as a measurement solvent, the $^{13}$C-NMR spectrum was measured under the measuring conditions (100 MHz, ECX 400P, made by JEOL Ltd) of temperature of 120°C, spectral width of 250 ppm, pulse repeating time of 5.5 seconds, and a pulse width of 4.7 μsec (45° pulse), or under the measuring conditions (125 MHz, AVANCE III Cryo-500 made by Bruker Biospin Inc) of temperature of 120°C, spectral width of 250 ppm, pulse repeating time of 5.5 seconds, and a pulse width of 5.0 μsec (45° pulse), and the B-value was calculated based on the following Formula [1]. The peak attribution was performed by reference to the aforementioned publicly-known literature.

$$B = \frac{P_{OE}}{2 P_O \cdot P_E} \quad \cdots [1]$$

In Formula [1], $P_E$ indicates the molar fraction contained in the ethylene component, Po indicates the molar fraction contained in the α-olefin component, and $P_{OE}$ indicates the molar fraction of the ethylene-α-olefin sequences of all dyad sequences.

< Molecular weight distribution >

Employing the HLC-8320 GPC (gel permeation chromatography) device produced by Tosoh Corporation, the molecular weight distribution was measured as below. Four TSK gel Super Multipore HZ-M columns were used as separation columns, the column temperature was 40°C, tetrahydrofuran (made by Wako Pure Chemical Industries) was used as the mobile phase, with a development rate of 0.35 ml/minute, a sample concentration of 5.5 g/L, a sample injection amount of 20 microliters, and a differential refractometer was used as a detector. PStQuick MP-M; made by Tosoh Corporation) was used as the reference polystyrene. In accordance with general-purpose calibration procedures, weight average molecular weight (Mw) and number average molecular weight (Mn) were calculated in terms of polystyrene molecular weight, and the molecular weight distribution (Mw/Mn) was calculated from those values.

< Viscosity properties >

The 100°C kinematic viscosity, 40°C kinematic viscosity and the viscosity index were measured and calculated by the method described in JIS K2283.

< Pour point >

The pour point was measured by the method described in ASTM D97. Pour points lower than -50°C were described as

<-50(°C).

< -40°C viscosity >

As the low-temperature viscosity properties, in accordance with ASTM D2983, the -40°C viscosity was measured at -40°C with a Brookfield viscometer.

< Thermal and oxidation stability >

Regarding thermal and oxidation stability, a test was conducted in accordance with the Oxidation Stability Test of Lubricating Oil for Internal Combustion Engines (ISOT) method described in JIS K2514, and the lacquer rating was evaluated 72 hours after the test time.

[Production of ethylene-α-olefin copolymer (B)]

Ethylene-α-olefin copolymers (B) were prepared in accordance with the Polymerization Examples below. The resulting ethylene-α-olefin copolymer (B) was subjected to hydrogenation operation as required by the below process.

[Polymerization Example 1]

760 ml of heptane and 120 g of propylene were charged into a stainless steel autoclave with a volume of 2 L sufficiently substituted with nitrogen, and the temperature in the system was raised to 150°C, and then 0.85 MPa of hydrogen and 0.19 MPa of ethylene were supplied to raise the total pressure to 3 MPaG. Then, 0.4 mmol of triisobutyl aluminum, 0.0002 mmol of diphenylmethylene [$\eta^5$-(3-n-butyl cyclopentadienyl)] [$\eta^5$-(2,7-di-tert-butyl fluorenyl)] zirconium dichloride, and 0.002 mmol of N,N-dimethylanilinium tetrakis (pentafluorophenyl) borate were injected with nitrogen, and polymerization was started by stirring with a rotation of 400 rpm. Ethylene was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried at 80°C under reduced pressure for 10 hours. The resulting polymer had an ethylene content of 49.5 mol%, an Mw of 5,100, an Mw/Mn of 1.7, a B-value of 1.2, and a 100°C kinematic viscosity of 150 $mm^2/s$.

[Polymerization Example 2]

710 mL of heptane and 145 g of propylene were charged into a stainless steel autoclave with a volume of 2L sufficiently substituted with nitrogen, and the temperature in the system was raised to 150°C, and then 0.40 MPa of hydrogen and 0.27 MPa of ethylene were supplied to raise the total pressure to 3 MPaG. Then, 0.4 mmol of triisobutyl aluminum, 0.0001 mmol of diphenylmethylene [$\eta^5$-(3-n-butyl cyclopentadienyl)] [$\eta^5$-(2,7-di-tert-butyl fluorenyl)] zirconium dichloride, and 0.001 mmol of N,N-dimethylanilinium tetrakis (pentafluorophenyl) borate were injected with nitrogen, and polymerization was started by stirring with a rotation of 400 rpm. Ethylene only was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried overnight at 80°C under reduced pressure to obtain 52.2 g of an ethylene-propylene copolymer. The resulting polymer had an ethylene content of 52.9 mol%, an Mw of 8,600, an Mw/Mn of 1.8, a B-value of 1.2, and a 100°C kinematic viscosity of 600 $mm^2/s$.

[Polymerization Example 3]

250 mL of heptane was charged into a glass polymerization vessel with a volume of 1 L sufficiently substituted

with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into the polymerization vessel, and 0.023 mmol of N,N-dimethylanilinium tetrakis (pentafluorophenyl) borate and 0.00230 mmol of diphenylmethylene [$\eta^5$-(3-n-butyl cyclopentadienyl)] [$\eta^5$-(2,7-di-tert-butyl fluorenyl)] zirconium dichloride, which were pre-mixed in toluene for 15 minutes or more, were charged into the polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The resulting polymer had an ethylene content of 52.4 mol%, an Mw of 13,600, an Mw/Mn of 1.9, a B-value of 1.2, and a 100°C kinematic viscosity of 2,000 $mm^2/s$.

[Polymerization Example 4]

760 ml of heptane and 120 g of propylene were charged into a stainless steel autoclave with a volume of 2 L sufficiently substituted with nitrogen, and the temperature in the system was raised to 150°C, and then 0.85 MPa of hydrogen and 0.19 MPa of ethylene were supplied to raise the total pressure to 3 MPaG. Then, 0.4 mmol of triisobutyl aluminum, 0.0002 mmol of dimethylsilyl bis(indenyl) zirconium dichloride, and 0.059 mmol of MMAO were injected with nitrogen, and polymerization was started by stirring with a rotation of 400 rpm. Ethylene was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried at 80°C under reduced pressure for 10 hours. The resulting polymer had an ethylene content of 48.5 mol%, an Mw of 5,000, an Mw/Mn of 1.8, a B-value of 1.2, and a 100°C kinematic viscosity of 150 $mm^2/s$.

[Polymerization Example 5]

710 mL of heptane and 145 g of propylene were charged into a stainless steel autoclave with a volume of 2L sufficiently substituted with nitrogen, and the temperature in the system was raised to 150°C, and then 0.40 MPa of hydrogen and 0.27 MPa of ethylene were supplied to raise the total pressure to 3 MPaG. Then, 0.4 mmol of triisobutyl aluminum, 0.0001 mmol of dimethylsilyl bis(indenyl) zirconium dichloride, and 0.029 mmol of MMAO were injected with nitrogen, and polymerization was started by stirring with a rotation of 400 rpm. Ethylene only was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried overnight at 80°C under reduced pressure to obtain 52.2 g of an ethylene-propylene copolymer. The resulting polymer had an ethylene content of 53.3 mol%, an Mw of 8,500, an Mw/Mn of 1.9, a B-value of 1.2, and a 100°C kinematic viscosity of 600 $mm^2/s$.

[Polymerization Example 6]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into a polymerization vessel, and 0.688 mmol of MMAO and 0.00230 mmol of dimethylsilyl bis(indenyl) zirconium dichloride, which were pre-mixed in toluene for 15 minutes or more, were charged into a polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The resulting polymer had an ethylene content of 52.1 mol%, an Mw of 13,800, an Mw/Mn of 2.0, a B-value of 1.2, and a

100°C kinematic viscosity of 2,000 $mm^2/s$.

The copolymer obtained by Polymerization Example 1, the copolymer obtained by Polymerization Example 2, the copolymer obtained by Polymerization Example 3, the copolymer obtained by Polymerization Example 4, the copolymer obtained by Polymerization Example 5, and the copolymer obtained by Polymerization Example 6, are respectively described below as Polymer 1, Polymer 2, Polymer 3, Polymer 4, Polymer 5, and Polymer 6.

[Preparation of lubricating oil composition for compressor oils]

The components used other than the ethylene-α-olefin copolymer in the preparation of the below lubricating oil compositions are as follows.

Lubricant base oil;

The below lubricant base oils were used as the mineral oils.

Mineral oil-A: API (American Petroleum Institute) Group III mineral oil with a 100°C kinematic viscosity of 6.5 $mm^2/s$, a viscosity index of 131, and a pour point of -12.5°C (Yubase-6; made by SK Lubricants), and

Mineral oil-B: API (American Petroleum Institute) Group I mineral oil with a 100°C kinematic viscosity of 6.8 $mm^2/s$, a viscosity index of 108, and a pour point of -12.5°C (Super Oil N-32, made by JX Nippon Oil & Energy Corporation).

Moreover, the below lubricant base oils were used as the synthetic oils.

Synthetic oil-A: Synthetic oil poly-α-olefin with a 100°C kinematic viscosity of 4.0 $mm^2/s$, a viscosity index of 123, and a pour point of -50°C or lower (NEXBASE 2004; made by Neste),

Synthetic oil-B: Synthetic oil poly-α-olefin with a 100°C kinematic viscosity of 5.8 $mm^2/s$, a viscosity index of 138, and a pour point of -50°C or lower (NEXBASE 2006; made by Neste),
Synthetic oil-C: Synthetic oil poly-α-olefin with a 100°C kinematic viscosity of 8.0 $mm^2/s$, a viscosity index of 142, and a pour point -50°C (Spectrasyn™ 8, made by ExxonMobil Chemical), and
Synthetic oil-D: Ester-based synthetic oil trimethylolpropane caprylate (TMTC) with a 100°C kinematic viscosity of 4.5 $mm^2/s$, a viscosity index of 142, and a pour point -50°C or lower (SYNATIVE™ ES TMTC, made by Cognis) .

In addition to the lubricant base oil and ethylene-α-olefin copolymer, the below types of additives were used.

Pour point lowering agent (PPD)-A; IRGAFLOW 720P made by BASF

Additive package-A; HITEC-3339 made by AFTON CHEMICAL,
Additive package-B; LUBRIZOL 1047UI made by LUBRIZOL, and
Antioxidant; Phenol-based antioxidant (Irganox L135 made by BASF).

< Lubricating oil composition for compressor oils >

[Example 1]

Synthetic oil-A was used as the lubricant base oil (A), and the copolymer obtained in Polymerization Example 2 (Polymer 2) was used as the ethylene-α-olefin copolymer (B). These were mixed together with an antioxidant and adjusted to 100% by mass, thereby preparing a lubricating oil composition for compressor oils. The addition amounts of the respective components are as shown in Table 2. The physical properties of the lubricating oil composition are shown in Table 2.

[Examples 2 to 16, Comparative Examples 1 to 7]

Except for changing the types of components and addition amounts to those as described in Table 2, the lubricating oil compositions for compressor oil were mixed and prepared in the same way as in Example 1. The physical properties of the resulting lubricating oil compositions are shown in Table 2.

Table 2

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| Polymer 1 | % by mass | | | | | | | | | | | 39.0 | |
| Polymer 2 | % by mass | 11.0 | | 10.0 | | 7.0 | | 15.0 | | 21.0 | | | 24.0 |
| Polymer 3 | % by mass | | 8.0 | | 8.0 | | 6.0 | | 11.0 | | 16.0 | | |
| Polymer 4 | % by mass | | | | | | | | | | | | |
| Polymer 5 | % by mass | | | | | | | | | | | | |
| Polymer 6 | % by mass | | | | | | | | | | | | |
| Mineral oil - A | % by mass | | | | | 92.3 | 93.3 | | | | | | |
| Mineral oil - B | % by mass | | | | | | | | | | | | |
| Synthetic oil - A | % by mass | 88.8 | 91.8 | | | | | | | | | | |
| Synthetic oil - B | % by mass | | | 88.8 | 91.8 | | | 84.8 | 88.8 | 78.8 | 83.8 | | |
| Synthetic oil - C | % by mass | | | | | | | | | | | 49.8 | 64.8 |
| Synthetic oil - D | % by mass | | | | | | | | | | | 10.0 | 10.0 |
| Antioxidant | % by mass | 0.2 | 0.2 | 0.2 | 0.2 | 0.2 | 0.2 | 0.2 | 0.2 | 0.2 | 0.2 | | |
| Additive Package - A | % by mass | | | | | | | | | | | 1.2 | 1.2 |
| Additive Package - B | % by mass | | | | | | | | | | | | |
| Pour point lowering agent - A | % by mass | | | | | 0.5 | 0.5 | | | | | | |
| 40°C kinematic viscosity | $mm^2/s$ | 46 | 47 | 68 | 68 | 67 | 70 | 98 | 100 | 148 | 158 | 230 | 230 |
| Viscosity index | - | 170 | 175 | 158 | 158 | 148 | 153 | 161 | 163 | 167 | 159 | 161 | 168 |
| Pour point | °C | <-50 | <-50 | <-50 | <-50 | | | -50 | < -50 | -43 | -45 | | |
| -40°C viscosity | mPa·s | 9,500 | 9,200 | 22,000 | 20,000 | | | 44,000 | 38,000 | 75,000 | 76,000 | | |
| ISOT | Lacquer rating | Adhered substance (thin) | Adhered substance (thin) | Adhered substance (thin) | Adhered substance (thin) | Adhered substance (medium) | Adhered substance (medium) | Adhered substance (medium) | Adhered substance (medium) | Adhered substance (medium) | Adhered substance (medium) | Adhered substance (medium) | Adhered substance (medium) |

Table 2 (continued)

| | | Ex. 13 | Ex. 14 | Ex. 15 | Ex. 16 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|
| Polymer 1 | % by mass | | 39.0 | | | | | | | | | |
| Polymer 2 | % by mass | | | 25.0 | | | | | | | | |
| Polymer 3 | % by mass | 16.0 | | | 18.0 | | | | | | | |
| Polymer 4 | % by mass | | | | | | | | | 39.0 | | |
| Polymer 5 | % by mass | | | | | 11.0 | | 7.0 | | | 25.0 | |
| Polymer 6 | % by mass | | | | | | 8.0 | | 6.0 | | | 18.0 |
| Mineral oil - A | % by mass | | | | | | | 92.3 | 93.3 | | | |
| Mineral oil - B | % by mass | | 59.5 | 73.5 | 80.5 | | | | | 59.5 | 73.5 | 80.5 |
| Synthetic oil - A | % by mass | | | | | 88.8 | 91.8 | | | | | |
| Synthetic oil - B | % by mass | | | | | | | | | | | |
| Synthetic oil - C | % by mass | 72.8 | | | | | | | | | | |
| Synthetic oil - D | % by mass | 10.0 | | | | | | | | | | |
| Antioxidant | % by mass | | | | | 0.2 | 0.2 | 0.2 | 0.2 | | | |
| Additive Package - A | % by mass | 1.2 | | | | | | | | | | |
| Additive Package - B | % by mass | | 1.0 | 1.0 | 1.0 | | | | | 1.0 | 1.0 | 1.0 |
| Pour point lowering agent - A | % by mass | | 0.5 | 0.5 | 0.5 | | | 0.5 | 0.5 | 0.5 | 0.5 | 0.5 |
| 40°C kinematic viscosity | $mm^2/s$ | 228 | 223 | 222 | 216 | 46 | 47 | 67 | 70 | 225 | 220 | 221 |
| Viscosity index | - | 167 | 150 | 160 | 164 | 170 | 175 | 148 | 153 | 151 | 159 | 166 |
| Pour point | °C | | | | | <-50 | <-50 | | | | | |
| -40°C viscosity | mPa·s | | | | | 9,300 | 9,600 | | | | | |
| ISOT | Lacquer rating | Adhered substance (thin) | Adhered substance (thin) | Adhered substance (thin) | Adhered substance (thin) | Adhered substance (thick) | Adhered substance (thick) | Adhered substance (thick) | Adhered substance (thick) | Adhered substance (thick) | Adhered substance (thick) | Adhered substance (thick) |

## Claims

**1.** A lubricating oil composition for compressor oils, comprising

10 to 99% by mass of a lubricant base oil (A) having the properties of the below (A1) to (A3), and
90 to 1% by mass of a liquid random copolymer (B) of ethylene and $\alpha$-olefin, the liquid random copolymer (B) being prepared by the below method ($\alpha$) (where the total amount of the lubricant base oil (A) and the copolymer (B) is 100% by mass), the lubricating oil composition for compressor oils having the property of the below (C1).
(A1) The lubricant base oil has a kinematic viscosity at 100°C of 1 to 14 $mm^2/s$.

(A2) The lubricant base oil has a viscosity index of 100 or more.

(A3) The lubricant base oil has a pour point of 0°C or lower. (C1) The lubricating oil composition for compressor oils has a kinematic viscosity at 40°C of 10 to 300 $mm^2/s$.

(Method (α))

A method (α) for preparing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

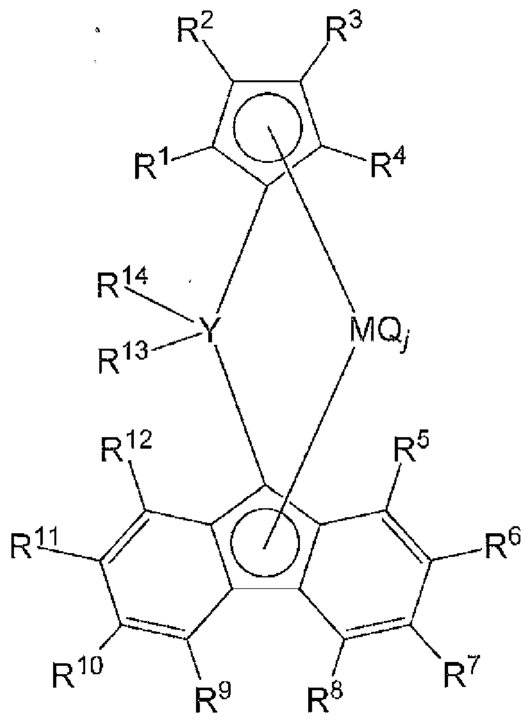

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

**2.** A lubricating oil composition for compressors according to Claim 1, wherein in the metallocene compound represented by the above Formula 1, at least one among substituents ($R^1$, $R^2$, $R^3$ and $R^4$) bonded to a cyclopentadienyl group, is a hydrocarbon group having 4 or more carbon atoms.

**3.** A lubricating oil composition for compressors according to Claim 1 or 2, wherein $R^6$ and $R^{11}$, being the same, are hydrocarbon groups having 1 to 20 carbon atoms.

**4.** A lubricating oil composition for compressors according to any one of Claims 1 to 3, wherein in the metallocene compound represented by the above Formula 1, substituent ($R^2$ or $R^3$) bonded to the 3-position of the cyclopentadienyl group is a hydrocarbon group.

**5.** A lubricating oil composition for compressors according to Claim 4, wherein in the metallocene compound represented by the above Formula 1, the hydrocarbon group ($R^2$ or $R^3$) bonded to the 3-position of the cyclopentadienyl group is an n-butyl group.

**6.** A lubricating oil composition for compressors according to any one of Claims 1 to 5, wherein in the metallocene compound represented by the above Formula 1, substituents ($R^6$ and $R^{11}$) bonded to the 2-position and 7-position of the fluorenyl group are all tert-butyl groups.

**7.** A lubricating oil composition for compressors according to any one of Claims 1 to 6, wherein the compound which reacts with the bridged metallocene compound to form an ion pair is a compound represented by the following Formula 6.

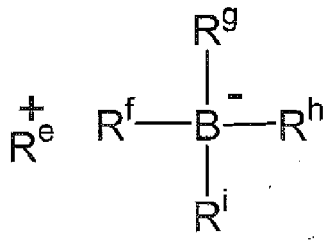

··· (Formula 6)

[In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.]

**8.** A lubricating oil composition for compressors according to Claim 7, wherein the ammonium cation is a dimethylanilinium cation.

**9.** A lubricating oil composition for compressors according to Claim 7 or 8, wherein the catalyst system further comprises an organoaluminum compound selected from a group consisting of trimethyl aluminum and triisobutyl aluminum.

**10.** A lubricating oil composition for compressor oils according to any one of Claims 1 to 9, wherein the content of the liquid random copolymer (B) is 1 to 20% by mass.

**11.** A lubricating oil composition for compressor oils, comprising

10 to 99% by mass of a lubricant base oil (A) having the properties of the below (A1) to (A3), and
90 to 1% by mass of a liquid random copolymer of ethylene and $\alpha$-olefin, the liquid random copolymer having the properties of the below (B1) to (B5) (where the total amount of the lubricant base oil (A) and the copolymer is 100% by mass), the lubricating oil composition for compressor oils having the property of the below (C1).

(A1) The lubricant base oil (A) has a kinematic viscosity at 100°C of 1 to 14 $mm^2/s$.

(A2) The lubricant base oil (A) has a viscosity index of 100 or more.
(A3) The lubricant base oil (A) has a pour point of 0°C or lower.
(B1) The liquid random copolymer comprises 40 to 60 mol% of ethylene units and 60 to 40 mol% of $\alpha$-olefin units having 3 to 20 carbon atoms.
(B2) The liquid random copolymer has a number average molecular weight (Mn) of 500 to 10,000 and a molecular weight distribution (Mw/Mn, Mw is the weight average molecular weight) of 3 or less, as measured by Gel Permeation Chromatography (GPC).
(B3) The liquid random copolymer has a kinematic viscosity at 100°C of 30 to 5,000 $mm^2/s$.

(B4) The liquid random copolymer has a pour point of 30 to - 45°C.
(B5) The liquid random copolymer has a Bromine Number of 0.1 g / 100 g or less.
(C1) The lubricating oil composition for compressor oils has a kinematic viscosity at 40°C of 10 to 300 $mm^2/s$.

**12.** A lubricating oil composition for compressor oils according to any one of Claims 1 to 11, wherein the lubricant base oil (A) further satisfies the below (A4) to (A6).

(A4) The lubricant base oil (A) has a kinematic viscosity at 100°C of 1 to 10 $mm^2/s$.
(A5) The lubricant base oil (A) has a viscosity index of 110 or more.
(A6) The lubricant base oil (A) has a pour point of -10°C or lower.

**13.** A lubricating oil composition for compressor oils according to any one of Claims 1 to 12, wherein 30 to 100% by mass of the lubricant base oil (A) is mineral oil.

**14.** A lubricating oil composition for compressor oils according to any one of Claims 1 to 12, wherein 30 to 100% by mass of the lubricant base oil (A) is a synthetic oil, poly α olefin (PAO) and/or an ester oil.

**15.** A lubricating oil composition for compressor oils according to any one of Claims 1 to 14, having a kinematic viscosity at 40°C of 20 to 100 $mm^2/s$.

**16.** A rotary-type compressor oil, consisting of the lubricating oil composition for compressor oils according to any one of Claims 1 to 15.

**17.** An oil-flooded-screw compressor oil, consisting of the lubricating oil composition for compressor oils according to any one of Claims 1 to 15.

**18.** A method for producing a lubricating oil composition for compressor oils, comprising the steps of:

preparing a liquid random copolymer (B) of ethylene and α-olefin by the following method (α); and
preparing a lubricating oil composition for compressor oils by mixing a lubricant base oil (A) in an amount of 10 to 99% by mass of the lubricating oil composition, the lubricant base oil (A) having the properties of the below (A1) to (A3), and the liquid random copolymer (B) in an amount of 90 to 1% by mass of the lubricating oil composition (where the total amount of the lubricant base oil (A) and the copolymer (B) is 100% by mass), the lubricating oil composition for compressor oils having the property of the below (C1).
(A1) The lubricant base oil (A) has a kinematic viscosity at 100°C of 1 to 14 $mm^2/s$.
(A2) The lubricant base oil (A) has a viscosity index of 100 or more.
(A3) The lubricant base oil (A) has a pour point of 0°C or lower.
(C1) The lubricating oil composition for compressor oils has a kinematic viscosity at 40°C of 10 to 300 $mm^2/s$.

(Method (α))
A method (α) for preparing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

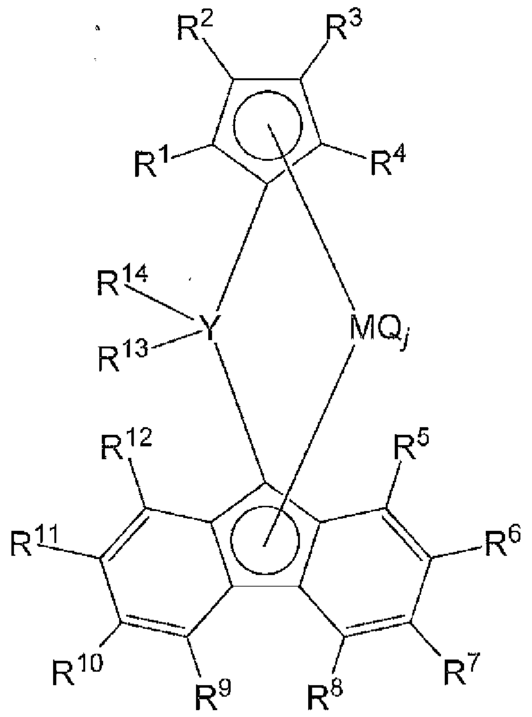

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

**INTERNATIONAL SEARCH REPORT**

International application No.
PCT/JP2019/013006

A. CLASSIFICATION OF SUBJECT MATTER
Int. Cl. C10M143/00(2006.01)i, C10M105/32(2006.01)i, C10M107/02(2006.01)i, C10M169/04(2006.01)i

According to International Patent Classification (IPC) or to both national classification and IPC

B. FIELDS SEARCHED
Minimum documentation searched (classification system followed by classification symbols)
Int. Cl. C10M143/00, C10M105/32, C10M107/02, C10M169/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2016-069407 A (MITSUI CHEMICALS, INC.) 09 May 2016, claims, paragraphs [0032]-[0116], examples 1, 3, 4, 6, 7, 9, 11, 12, 14, 16, 18, 19, 21, 23-31, 33-35, 37 (Family: none) | 1-17<br>1-18 |
| Y | WO 2015/147215 A1 (MITSUI CHEMICALS, INC.) 01 October 2015, claims, paragraph [0043], examples 2, 7, 8 & US 2017/0114166 A1, claims, paragraph [0071], examples 2, 7, 8 & EP 3124505 A1 & KR 10-2016-0121566 A & CN 106133006 A | 1-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18.06.2019 | 02.07.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/013006

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-544948 A (THE LUBRIZOL CORPORATION) 19 December 2013, claims, paragraph [0028], examples 1, 2 & US 2014/0005086 A1, claims, paragraph [0030], examples 1, 2 & WO 2012/078572 A1 & EP 2649167 A1 & CA 2820583 A & CN 103354832 A & KR 10-2013-0130003 A | 1-18 |
| Y | JP 2013-506036 A (MITSUI CHEMICALS, INC.) 21 February 2013, claims, paragraphs [0023], [0047], examples 1-7 & US 2012/0190601 A1, claims, paragraphs [0026], [0054], examples 1-7 & WO 2011/037585 A1 & EP 2483377 A1 & CA 2775584 A & CN 102549126 A & AU 2010298066 A & KR 10-2012-0073285 A | 1-18 |
| Y | WO 2009/101936 A1 (MITSUI CHEMICALS, INC.) 20 August 2009, claims, paragraphs [0024], [0075]-[0081], examples 1-13 & US 2009/0209721 A1, claims, paragraphs [0036], [0085]-[0091], examples 1-13 & EP 2243795 A1 & CA 2703606 A | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008179679 A
- JP 2002519448 A
- JP 2016069407 A
- EP 2921509 A1
- EP 0776959 A
- EP 0668342 A
- WO 9721788 A
- WO 0015736 A
- WO 0014188 A
- WO 0014187 A
- WO 0014183 A
- WO 0014179 A
- WO 0008115 A
- WO 9941332 A
- EP 1029029 A
- WO 0118156 A
- WO 0157166 A
- US 3382291 A
- US 3763244 A
- US 5171908 A
- US 3780128 A
- US 4032591 A
- JP H01163136 A
- US 4967032 A
- US 4926004 A
- JP S6337102 A
- JP 2005200447 A
- JP 2005200448 A
- JP 2009503147 A
- JP 2009501836 A
- US 3909432 A
- US 4960878 A
- US 5041584 A
- KR 10551147 A
- JP H01501950 A
- JP H03179005 A
- JP H03179006 A
- JP H03207703 A
- JP H03207704 A
- US 5321106 A
- JP 2004051676 A


### Non-patent literature cited in the description


- Illustrated guide to the introductory basics of industrial lubricating oil. Lubricant Technology. Nikkan Kogyo Shimbun, Ltd [The Daily Industrial News, 2011
- API Publication. April 2002, 1509
- Tosoh Research & Technology Review. Tosoh Finechem Corporation, 2003, vol. 47, 55